# EUROPEAN PATENT APPLICATION

(11) **EP 4 752 624 A1**
(43) Date of publication of application: **03.06.2026**
(21) Application number: 25216447.0
(22) Date of filing: 17.11.2025
(51) Int. Cl.: G02F 1/1333

(54) **DISPLAY DEVICE AND METHOD OF MANUFACTURING DISPLAY DEVICE**

(30) Priority: 27.11.2024 JP 2024205990
(71) Applicant: Alps Alpine Co., Ltd., Ota-ku, Tokyo 145-8501 (JP)
(72) Inventor: Komatsu, Masanori, Iwaki-city, Fukushima (JP); Yamagata, Kazuyoshi, Iwaki-city, Fukushima (JP); Haraguchi, Hiroki, Iwaki-city, Fukushima (JP); Yamashita, Daichi, Iwaki-city, Fukushima (JP); Suzuki, Keiichiro, Iwaki-city, Fukushima (JP)
(74) Representative: Schmitt-Nilson Schraud Waibel Wohlfrom Patentanwälte Partnerschaft mbB

(57) **Abstract**

A display device includes a frame member; a glass cover plate configured to be fixed to the frame member; an adhesive layer configured to be disposed on an inner surface of the cover plate located within a window surrounded by the frame member; and a display cell configured to be fixed to the inner surface of the cover plate via the adhesive layer. The frame member has an inner side surface surrounding the window, a weir portion protruding from the inner side surface toward the window, and a weir end surface serving as part of the weir portion and extending continuously around an entire periphery of the window at a boundary portion with the inner surface of the cover plate. The adhesive layer is formed of an optically clear adhesive applied to the inner surface of the cover plate and is in contact with the weir end surface.

## Description

This application is based on and claims priority to Japanese Patent Application No. 2024-205990, filed on November 27, 2024.

The present disclosure relates to a display device in which a cover plate is fixed to a window surrounded by a frame member and a display cell is fixed to an inner surface of the cover plate via an adhesive layer formed of an optically clear adhesive, and to a method of manufacturing the display device.

In a display device illustrated in FIG. 3 of Japanese Patent No. 5702112 (Patent Document 1), a step portion is formed at an outer periphery of a protective plate such as glass, a step portion is formed around an opening of a device body cover, and the step portion of the protective plate and the step portion of the device body cover are bonded and fixed to each other by an adhesive tape. A liquid crystal display touch panel is bonded to a rear surface of the protective plate via an optically elastic resin.

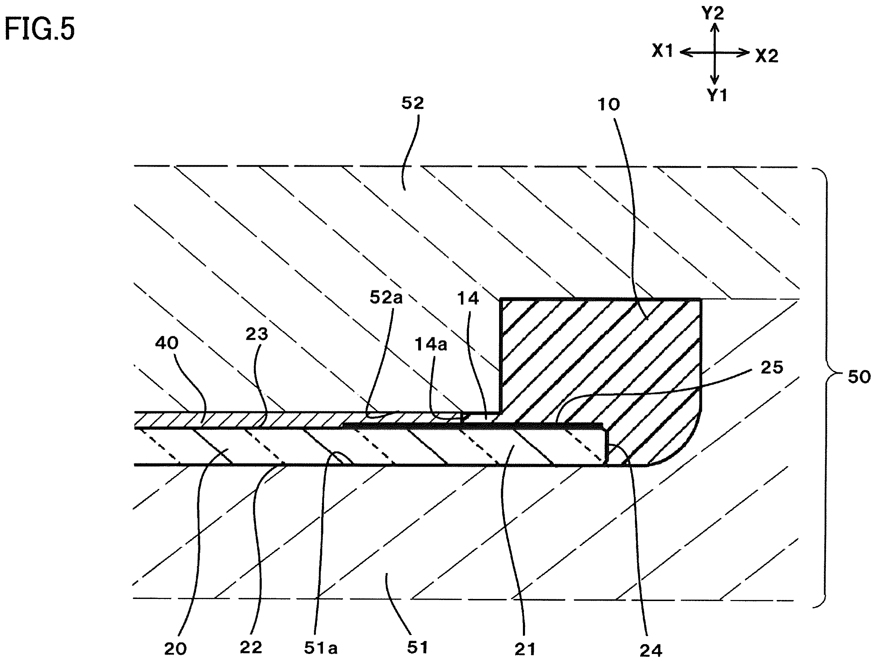

Re-publication of PCT International Publication No. WO2018/135519 (Patent Document 2) describes a touch sensor for use in combination of a display device. In the touch sensor, a first wiring body and a cover panel such as glass are stacked on each other. The first wiring body includes a first resin, a second resin, and a third resin, which are stacked together, and conductive portions are provided between the first resin and the second resin and between the second resin and the third resin. The third resin of the first wiring body is bonded to the cover panel via a transparent adhesive. A second wiring body that is a part of a flexible wiring board is bonded, by a conductive adhesive portion, to a second conductive portion provided on the second resin. Further, a sealing resin (80) covering an exposed terminal portion is provided. In a configuration illustrated in FIG. 5, a corner portion (555) is formed in the third resin so as to prevent the sealing resin from spreading toward the cover panel. In a configuration illustrated in FIG. 14, a groove portion (537) is formed in the third resin so as to prevent the sealing resin from spreading.

The present disclosure relates to a display device and method of manufacturing a display device according to the appended claims. Embodiments are disclosed in the dependent claims.

According to an embodiment of the present disclosure, a display device includes a frame member; a glass cover plate configured to be fixed to the frame member; an adhesive layer configured to be disposed on an inner surface of the cover plate located within a window surrounded by the frame member; and a display cell configured to be fixed to the inner surface of the cover plate via the adhesive layer, wherein the frame member has an inner side surface surrounding the window, a weir portion protruding from the inner side surface toward the window, and a weir end surface serving as part of the weir portion and extending continuously around an entire periphery of the window at a boundary portion with the inner surface of the cover plate, and the adhesive layer is formed of an optically clear adhesive applied to the inner surface of the cover plate and is in contact with the weir end surface.

According to an embodiment of the present disclosure, a method of manufacturing a display device, the display device including a frame member, a glass cover plate configured to be fixed to the frame member, an adhesive layer configured to be formed on an inner surface of the cover plate located within a window surrounded by the frame member, and a display cell configured to be fixed to the inner surface of the cover plate via the adhesive layer is provided. The method includes forming, by using a glass insert molding method, the frame member formed of a synthetic resin material such that the frame member is in close contact with the cover plate; and forming the adhesive layer by applying an optically clear adhesive in liquid form to the inner surface of the cover plate, blocking the optically clear adhesive by a weir end surface, and curing the optically clear adhesive, wherein in the forming of the frame member, the frame member is formed so as to have an inner side surface surrounding the window, a weir portion protruding from the inner side surface toward the window, and the weir end surface serving as part of the weir portion and extending continuously around an entire periphery of the window at a boundary portion with the inner surface of the cover plate.

### BRIEF DESCRIPTION OF THE DRAWINGS

FIG. 1 is a perspective view of a display device according to an embodiment of the present disclosure, as viewed from the front;
FIG. 2 is a partial cross-sectional view of the display device according to an embodiment of the present disclosure, taken along the line II-II of FIG. 1;
FIG. 3 is a partial cross-sectional view illustrating a method of manufacturing the display device according to an embodiment of the present disclosure and illustrating a cover plate including a protective sheet;
FIG. 4 is a partial cross-sectional view illustrating a method of manufacturing the display device according to an embodiment of the present disclosure and illustrating a state in which the cover plate is held within a mold in a glass insert molding process;
FIG. 5 is a partial cross-sectional view illustrating a method of manufacturing the display device according to an embodiment of the present disclosure and illustrating a state in which a molten resin is injected into a cavity in the glass insert molding process;
FIG. 6 is a partial cross-sectional view illustrating a method of manufacturing the display device according to an embodiment of the present disclosure and illustrating a process of applying an optically clear adhesive in liquid form to an inner surface of the cover plate;
FIG. 7 is a partial cross-sectional view illustrating a method of manufacturing the display device according to an embodiment of the present disclosure and illustrating and a process of bonding a display cell to the inner surface of the cover plate; and
FIG. 8 is a partial cross-sectional view illustrating a method of manufacturing the display device according to an embodiment of the present disclosure and illustrating a finished state in which the display cell is bonded to the inner surface of the cover plate.

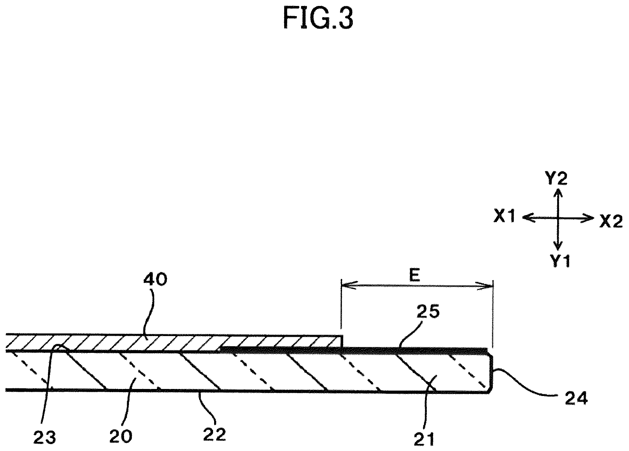

In the display device illustrated in FIG. 3 of Patent Document 1, the liquid crystal display touch panel is bonded to the rear surface of the protective plate via the optically elastic resin. In a case where an optically clear resin (OCR) is used as the optically elastic resin, it is necessary to appropriately control the application region and the application amount of the OCR in liquid form. If a process of applying and temporarily curing the OCR in a state in which the application amount of the OCR is inappropriate and bonding the touch panel and the protective plate together is performed, the OCR, which bulged because of surface tension, remains inside the device body cover in a state of being temporarily cured. In this case, an outer peripheral portion of the touch panel is likely to come into contact with the bulged OCR. Therefore, the display device cannot be assembled unless the size of the touch panel is made considerably small. Further, even if a process of bonding the touch panel and the protective plate together in a state in which the OCR is not cured is employed, there is a possibility that the OCR flows out to the periphery of the touch panel if the application amount of the OCR is inappropriate.

Patent Document 2 describes a technique for preventing the sealing resin from spreading by forming the corner portion (555) or the groove portion (537) in the third resin with which the sealing resin covering the exposed terminal portion makes contact. Even if the technique described in Patent Document 2 is applied to the display device of Patent Document 1, as is apparent from FIG. 5 and FIG. 14 of Patent Document 2, it is difficult to completely eliminate a phenomenon in which the OCR overflows to and remains on a peripheral portion of the touch panel.

In view of the above, it is desirable to provide a display device that can prevent overflow of an adhesive layer at a periphery of a display cell by controlling the application amount of an optically clear adhesive that serves as an adhesive layer formed between a cover plate and the display cell.

According to an embodiment of the present disclosure, a display device includes a frame member; a glass cover plate configured to be fixed to the frame member; an adhesive layer configured to be disposed on an inner surface of the cover plate located within a window surrounded by the frame member; and a display cell configured to be fixed to the inner surface of the cover plate via the adhesive layer, wherein the frame member has an inner side surface surrounding the window, a weir portion protruding from the inner side surface toward the window, and a weir end surface serving as part of the weir portion and extending continuously around an entire periphery of the window at a boundary portion with the inner surface of the cover plate, and the adhesive layer is formed of an optically clear adhesive applied to the inner surface of the cover plate and is in contact with the weir end surface.

In the display device according to an embodiment of the present disclosure, the frame member can be formed of a synthetic resin material and can be in close contact with the cover plate.

In the display device according to an embodiment of the present disclosure, a front surface of the display cell facing the cover plate is located rearward relative to the weir end surface in a direction away from the cover plate.

In the display device according to an embodiment of the present disclosure, the adhesive layer is preferably not present between a side end surface of the display cell and the inner side surface of the frame member.

According to an embodiment of the present disclosure, a method of manufacturing a display device, the display device including a frame member, a glass cover plate configured to be fixed to the frame member, an adhesive layer configured to be formed on an inner surface of the cover plate located within a window surrounded by the frame member, and a display cell configured to be fixed to the inner surface of the cover plate via the adhesive layer is provided. The method includes forming, by using a glass insert molding method, the frame member formed of a synthetic resin material such that the frame member is in close contact with the cover plate; and forming the adhesive layer by applying an optically clear adhesive in liquid form to the inner surface of the cover plate, blocking the optically clear adhesive by the weir end surface, and curing the optically clear adhesive, wherein in the forming of the frame member, the frame member is formed so as to have an inner side surface surrounding the window, a weir portion protruding from the inner side surface toward the window, and a weir end surface serving as part of the weir portion and extending continuously around an entire periphery of the window at a boundary portion with the inner surface of the cover plate.

In a method of manufacturing the display device according to an embodiment of the present disclosure, in the glass insert molding method, the frame member is formed so as to be in close contact with an exposed portion of the cover plate located on an outer peripheral side relative to a protective sheet and so as to be in close contact with an outer peripheral end of the protective sheet in a state in which the protective sheet adheres to the inner surface of the cover plate, and the weir end surface is formed by peeling off the protective sheet from the inner surface of the cover plate.

A method of manufacturing the display device according to an embodiment of the present disclosure further includes fixing the display cell to the inner surface of the cover plate by positioning a front surface of the display cell facing the cover plate rearward relative to the weir end surface in a direction away from the cover plate.

In a method of manufacturing the display device according to an embodiment of the present disclosure, the adhesive layer is preferably not present between a side end surface of the display cell and the inner side surface of the frame member when the display cell is fixed to the inner surface of the cover plate.

According to an embodiment of the present disclosure, the amount of an optically clear adhesive that serves as an adhesive layer formed between a cover plate and a display cell can be controlled, and the adhesive layer can be prevented from extending beyond the outer periphery of a display cell or interference between the temporarily cured optically clear adhesive and the display cell can be prevented.

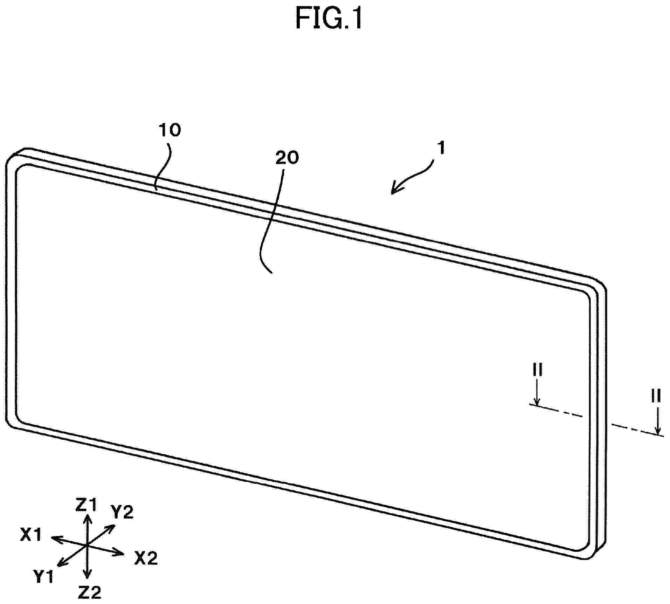

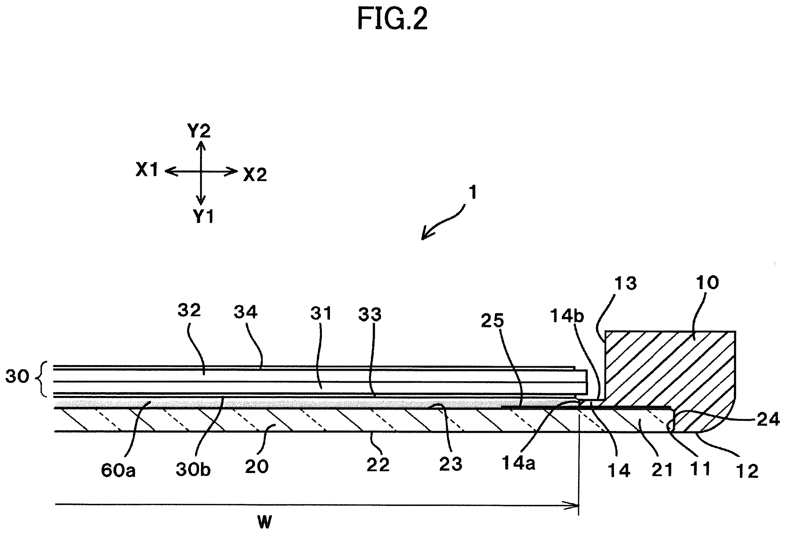

FIG. 1 illustrates an overall configuration of a display device 1 according to an embodiment of the present disclosure. FIG. 2 illustrates a partial cross-sectional view of a display device 1. The display device 1 according to an embodiment is for use in a vehicle. However, in addition to use in a vehicle, the display device 1 may be used for a game console, a theater, a portable device, or the like. A Y1-Y2 direction corresponds to a front-rear direction of the display device 1, a Y1 direction corresponds to a front direction or an outward direction, and a Y2 direction corresponds to a rear direction or an inward direction. An X1-X2 direction corresponds to a lateral direction of the display device 1. In FIG. 2, with respect to the lateral direction, an X1 direction corresponds to an inward direction and an X2 direction corresponds to an outward direction. A Z1-Z2 direction corresponds to an upper-lower direction of the display device 1.

The display device 1 includes a frame member (bezel) 10, and a region surrounded by the frame member 10 is a window W. The window W refers to a region that is surrounded by the frame member 10 and in which the frame member 10 is not present when viewed from the front side (Y1 side) or the rear side (Y2 side) of the display device 1. A cover plate 20 that is a glass plate is fixed to the frame member 10. The frame member 10 is formed by a glass insert molding method, and the frame member 10 and the cover plate 20 are fixed in close contact with each other. The frame member 10 is formed of a synthetic resin material. For example, the frame member 10 is formed of a thermoplastic elastomer such as a polyester-based elastomer or a PVC-based elastomer.

As illustrated in FIG. 2, the frame member 10 and the cover plate 20 are fixed to each other such that a close-fitting recessed portion 11 of the frame member 10 and an outer peripheral portion 21 of the cover plate 20 are in close contact with each other, and most of the cover plate 20 is located within the window W. A front surface 12 of the frame member 10 facing forward (in the Y1 direction) and an outer surface 22 of the cover plate 20 facing forward are coplanar with each other.

As illustrated in FIG. 2, the frame member 10 has an inner side surface 13 facing the window W and surrounding the window W. The inner side surface 13 is a flat surface perpendicular to the X-Z plane and is formed continuously in the lateral direction (X1-X2 direction) and the upper-lower direction (Z1-Z2 direction). The window W has a rectangular shape surrounded by the inner side surface 13 extending both in the lateral direction and the upper-lower direction. In the cross-sectional view of FIG. 2, the inner side surface 13 may be inclined in the X2 direction away from the window W as the inner side surface 13 extends rearward (in the Y2 direction), or the inner side surface 13 may have a curved shape in the cross-sectional view.

As illustrated in FIG. 2, a weir portion 14 protruding from the inner side surface 13 toward the window W is integrally formed with the frame member 10 at a boundary portion between the inner side surface 13 and an inner surface 23 of the cover plate 20. The weir portion 14 is formed continuously in the lateral direction (X1-X2 direction) and the upper-lower direction (Z1-Z2 direction) along the inner side surface 13 and extends continuously around the entire periphery of the window W. A weir end surface 14a is part of the weir portion 14. The weir end surface 14a is also formed continuously in the lateral direction (X1-X2 direction) and the upper-lower direction (Z1-Z2 direction) along the inner side surface 13 and extends continuously around the entire periphery of the window W at a boundary portion with the inner surface 23. The weir end surface 14a is a flat surface parallel to the inner side surface 13 and perpendicular to the X-Z plane, that is, perpendicular to the inner surface 23 of the cover plate 20.

As illustrated in FIG. 2, an adhesive layer 60a is formed on the inner surface 23 of the cover plate 20 located within the window W surrounded by the frame member 10. The adhesive layer 60a is formed of an optically clear adhesive. The optically clear adhesive (or an optically clear resin (OCR)), which is also referred to as an optically elastic resin, is applied to the inner surface 23 of the cover plate 20 in liquid form and cured by, for example, UV irradiation. The optically clear adhesive in liquid form applied to the inner surface 23 of the cover plate 20 is blocked by the weir end surface 14a and is controlled so as not to overflow onto an inner surface 14b of the weir portion 14.

A shielding layer (decorative layer) 25 is formed on the inner surface of a peripheral portion of the cover plate 20. The shielding layer 25 is a non-transparent film such as a black or dark green film. The shielding layer 25 is formed in a frame shape from an outer peripheral end 24 of the cover plate 20 so as to cover the weir portion 14 and the weir end surface 14a and further cover a portion of the adhesive layer 60a.

A display cell 30 is fixed to the inner surface 23 of the cover plate 20 located within the window W via the adhesive layer 60a. The display cell 30 is a liquid crystal display cell. In the display cell 30, a front glass substrate 31 and a rear glass substrate 32 are joined together, and a liquid crystal layer is interposed between the front glass substrate 31 and the rear glass substrate 32. Transparent electrodes are formed on the bonded inner surfaces of the front glass substrate 31 and the rear glass substrate 32, and a color filter is provided on the inner surface of either one of the glass substrates. A polarizing layer 33 is disposed on a front surface of the front glass substrate 31, and a polarizing layer 34 is disposed on a rear surface of the rear glass substrate 32. A front surface of the front polarizing layer 33 is a front surface 30b of the display cell 30, and the front surface 30b is fixed to the inner surface 23 of the cover plate 20 via the adhesive layer 60a. The display cell 30 is not limited to a liquid crystal display cell, and may be an electroluminescent display cell or the like.

Next, a method of manufacturing the display device 1 will be described.

FIG. 3 illustrates the cover plate 20 before assembly. A protective sheet 40 is attached to the inner surface 23 of the cover plate 20. The protective sheet 40 is a release sheet, the surface of the protective sheet 40 is coated with a release agent such as a fluorine-based release agent, and the protective sheet 40 is attached to the inner surface 23 of the cover plate 20 with a relatively weak adhesive force. The protective sheet 40 is provided only at a central portion of the inner surface 23 of the cover plate 20, and a region extending inward from the outer peripheral end 24 of the cover plate 20 and having a constant width serves as an exposed portion E of the cover plate 20 where the protective sheet 40 is not present. A portion of the shielding layer 25 is also exposed in the exposed portion E. The exposed portion E extends continuously in the upper-lower direction (Z1-Z2 direction) and the lateral direction (X1-X2 direction) on the inner surface 23 of the cover plate 20, and has the same width along the entire periphery of the cover plate 20. The exposed portion E of the cover plate 20 serves as the outer peripheral portion 21.

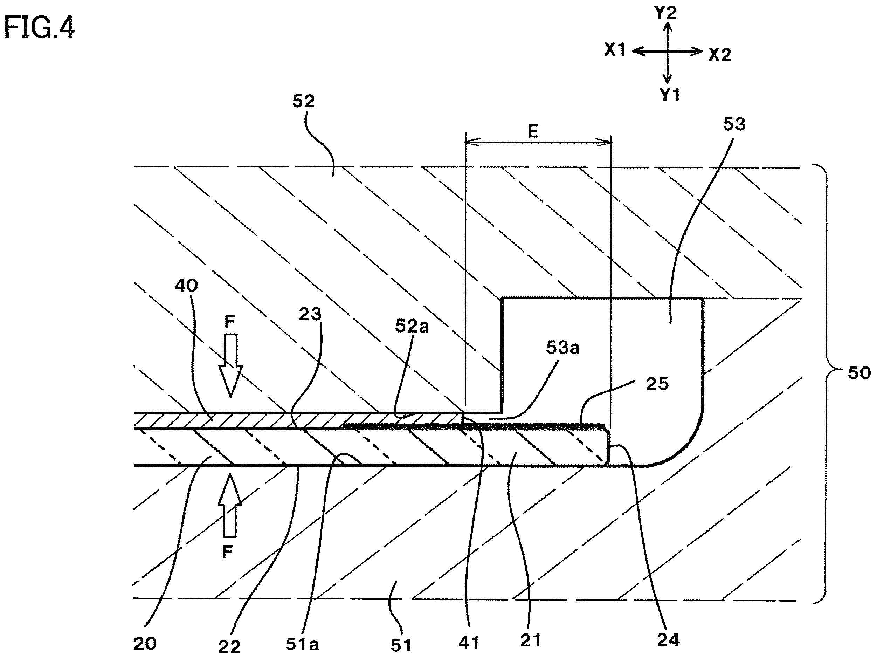

FIG. 4 and FIG. 5 illustrate a process of forming the frame member 10 by using a glass insert molding method. A mold 50 for forming the frame member includes a lower mold 51 and an upper mold 52. As illustrated in FIG. 4, in a state in which the protective sheet 40 is attached to the cover plate 20, the cover plate 20 is held on a holding inner surface 51a of the lower mold 51 by air suction or the like. When the lower mold 51 and the upper mold 52 are mated together, the cover plate 20 and the protective sheet 40 are sandwiched between the holding inner surface 51a of the lower mold 51 and a pressing surface 52a of the upper mold 52, and the protective sheet 40 is pressed from above and below (in the Y1-Y2 direction) by a mold clamping pressure F. A cavity 53 for forming the frame member 10 is formed at outer peripheral portions of the cover plate 20 and the protective sheet 40 inside the mold 50. The pressing surface 52a of the upper mold 52 is a flat surface parallel to the X-Z plane, and a portion of the pressing surface 52a extends outward (toward the X2 side) relative to the protective sheet 40. Thus, a narrow cavity 53a for forming the weir portion 14 is formed as part of the cavity 53 in a gap between the extending portion of the pressing surface 52a and the inner surface 23 (a surface of the shielding layer 25) of the cover plate 20.

In a state in which the cover plate 20 with the protective sheet 40 attached thereto is held inside the mold 50, a thermoplastic elastomer, which is a synthetic resin material, is injected into the cavity 53 in a molten resin state. The molten resin adheres to the outer peripheral end 24 of the cover plate 20 and the inner surface 23 (shielding layer 25) of the cover plate 20 at the exposed portion E of the cover plate 20 located on the outer peripheral side relative to the protective sheet 40. A portion of the molten resin flows into the narrow cavity 53a and also adheres to an outer peripheral end 41 of the protective sheet 40. When the lower mold 51 and the upper mold 52 are separated after the resin in the cavity 53 is cured, the frame member 10 is formed in a state of being fixed to the cover plate 20 by the cured thermoplastic elastomer.

When the frame member 10 integrally formed with the cover plate 20 is removed from the mold 50, and subsequently, the protective sheet 40 is peeled off from the inner surface 23 of the cover plate 20, the weir end surface 14a is formed at the inner end of the weir portion 14. As illustrated in FIG. 4, the pressing surface 52a of the upper mold 52 is a flat surface and the narrow cavity 53a is formed at a portion of the pressing surface 52a protruding outward (toward the X2 side) relative to the protective sheet 40. Thus, without the need to complicate the shape of the upper mold 52, the weir portion 14 having a small thickness h in the front-rear direction (Y1-Y2 direction) can be formed with high accuracy. Further, because the weir end surface 14a is formed by the outer peripheral end 41 of the protective sheet 40, the weir end surface 14a having the small thickness h can be highly accurately formed without burrs.

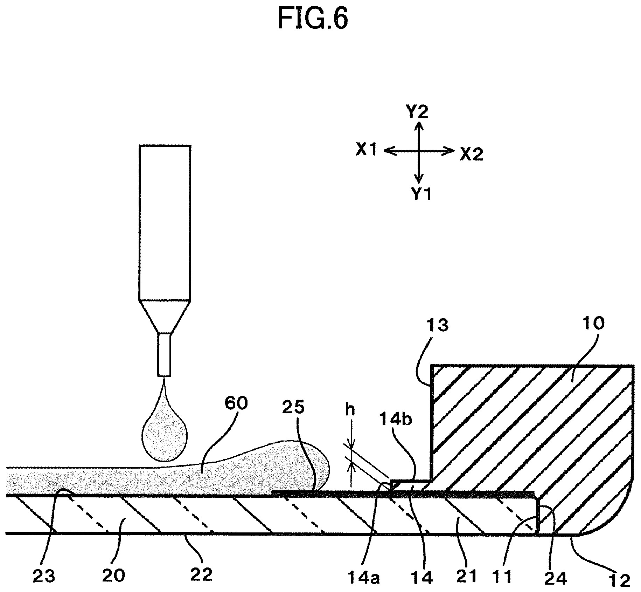

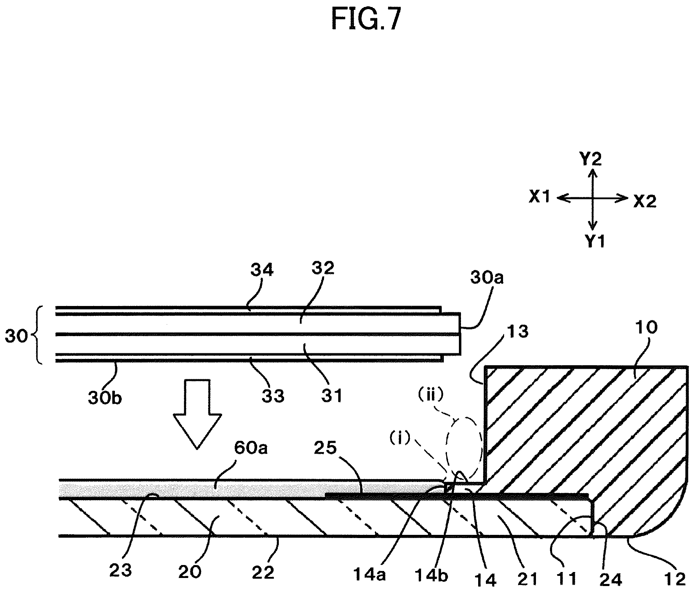

In a process illustrated in FIG. 6, an optically clear adhesive (an optically clear resin (OCR)) 60 in liquid form is applied to the inner surface 23 of the cover plate 20 located within the window W surrounded by the frame member 10, by using dispensing, slit coating, or the like. The optically clear adhesive 60 in liquid form applied to the inner surface 23 of the cover plate 20 is blocked by the weir end surface 14a. The liquid surface of the optically clear adhesive 60 in contact with the weir end surface 14a maintains a slightly bulged shape (i) because of its viscosity and surface tension as illustrated in FIG. 7. Thus, it is easy to prevent the optically clear adhesive 60 from flowing out to the inner surface 14b of the weir portion 14.

In a process illustrated in FIG. 7, the display cell 30 is bonded to the inner surface 23 of the cover plate 20 surrounded by the frame member 10. In a preferred bonding process, after the optically clear adhesive 60 in liquid form is applied to the inner surface of the cover plate 20, the optically clear adhesive 60 is temporarily cured by UV irradiation, thereby forming the adhesive layer 60a. Thereafter, the display cell 30 adheres to and is bonded to the inner surface of the adhesive layer 60a, and the adhesive layer 60a is completely cured by UV irradiation. Alternatively, a process of temporarily curing the optically clear adhesive 60 is not necessarily required. In such a case, after the optically clear adhesive 60 in liquid form is applied to the inner surface of the cover plate 20, the display cell 30 may be bonded to the inner surface of the optically clear adhesive 60. Then, in a state in which the display cell 30 is bonded to the optically clear adhesive 60, the optically clear adhesive 60 may be cured by UV irradiation, thereby forming the adhesive layer 60a. The cover plate 20 and the display cell 30 can be fixed to each other by the adhesive layer 60a in this case as well.

In a case where the optically clear adhesive 60 is applied to the inner surface 23 of the cover plate 20 and temporarily cured, the liquid surface of the adhesive layer 60a maintains the bulged shape (i) because of surface tension as illustrated in FIG. 7. Thus, the adhesive layer 60a does not extend beyond the weir end surface into a region (ii) that is a corner portion between the inner side surface 13 of the frame member 10 and the inner surface 14b of the weir portion 14. Further, in a case where a process of bonding the display cell 30 to the inner surface 23 of the cover plate 20 while the optically clear adhesive 60 is in liquid form without temporarily curing the optically clear adhesive 60 is adopted, the optically clear adhesive 60 is blocked by the weir end surface 14a and the liquid surface of the optically clear adhesive 60 maintains the slightly bulged shape (i). Thus, the adhesive layer 60a does not flow into the region (ii) that is the corner portion.

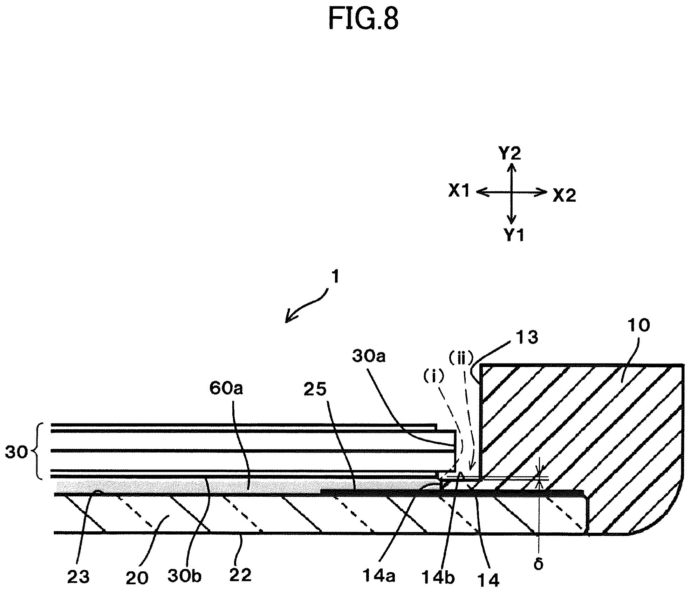

The adhesive layer 60a is not present in the region (ii) that is the corner portion between the inner side surface 13 of the frame member 10 and the inner surface 14b of the weir portion 14. Therefore, as illustrated in FIG. 8, when the display cell 30 is bonded to the inner surface 23 of the cover plate 20, a side end surface 30a of the display cell 30 and the inner side surface 13 of the frame member 10 can be brought close to each other, and thus a region surrounded by the frame member 10 can be widely and effectively used for display. Further, the thickness h, in the upper-lower direction (Y1-Y2 direction), of the weir portion 14 integrated with the frame member 10 is very small in accordance with the thickness of the protective sheet 40. For example, the thickness h is approximately 0.5 mm or more and 1.5 mm or less. Therefore, the front surface 30b of the display cell 30 facing the cover plate 20 and bonded to the cover plate 20 with the adhesive layer 60a interposed therebetween can be positioned rearward (in the Y2 direction) relative to the weir end surface 14a, and a slight gap δ can be formed between the front surface 30b of the display cell 30 and the inner surface 14b of the weir portion 14. As a result, the side end surface 30a of the display cell 30 can be brought close to the inner side surface 13 of the frame member 10.

Although embodiments have been described in detail above, the above-described embodiments are non-limiting examples, and various modifications and substitutions can be made to the above-described embodiments without departing from the scope of the claims.

## Claims

1. A display device comprising:
a frame member;
a glass cover plate configured to be fixed to the frame member;
an adhesive layer configured to be disposed on an inner surface of the cover plate located within a window surrounded by the frame member; and
a display cell configured to be fixed to the inner surface of the cover plate via the adhesive layer, wherein
the frame member has an inner side surface surrounding the window, a weir portion protruding from the inner side surface toward the window, and a weir end surface serving as part of the weir portion and extending continuously around an entire periphery of the window at a boundary portion with the inner surface of the cover plate, and
the adhesive layer is formed of an optically clear adhesive applied to the inner surface of the cover plate and is in contact with the weir end surface.

2. The display device according to claim 1, wherein the frame member is formed of a synthetic resin material and is in close contact with the cover plate.

3. The display device according to claim 1 or 2, wherein a front surface of the display cell facing the cover plate is located rearward relative to the weir end surface in a direction away from the cover plate.

4. The display device according to one of claims 1 to 3, wherein the adhesive layer is not present between a side end surface of the display cell and the inner side surface of the frame member.

5. A method of manufacturing a display device, the display device including
a frame member,
a glass cover plate configured to be fixed to the frame member,
an adhesive layer configured to be formed on an inner surface of the cover plate located within a window surrounded by the frame member, and
a display cell configured to be fixed to the inner surface of the cover plate via the adhesive layer, the method comprising:
forming, by using a glass insert molding method, the frame member formed of a synthetic resin material such that the frame member is in close contact with the cover plate; and
forming the adhesive layer by applying an optically clear adhesive in liquid form to the inner surface of the cover plate, blocking the optically clear adhesive by a weir end surface, and curing the optically clear adhesive, wherein
in the forming of the frame member, the frame member is formed so as to have an inner side surface surrounding the window, a weir portion protruding from the inner side surface toward the window, and the weir end surface serving as part of the weir portion and extending continuously around an entire periphery of the window at a boundary portion with the inner surface of the cover plate.

6. The method of manufacturing the display device according to claim 5, wherein,
in the glass insert molding method, the frame member is formed so as to be in close contact with an exposed portion of the cover plate located on an outer peripheral side relative to a protective sheet and so as to be in close contact with an outer peripheral end of the protective sheet in a state in which the protective sheet adheres to the inner surface of the cover plate, and
the weir end surface is formed by peeling off the protective sheet from the inner surface of the cover plate.

7. The method of manufacturing the display device according to claim 5 or 6, further comprising:
fixing the display cell to the inner surface of the cover plate by positioning a front surface of the display cell facing the cover plate rearward relative to the weir end surface in a direction away from the cover plate.

8. The method of manufacturing the display device according to one of claims 5 to 7, wherein the adhesive layer is not present between a side end surface of the display cell and the inner side surface of the frame member when the display cell is fixed to the inner surface of the cover plate.
